Europäisches Patentamt

(19) European Patent Office

Office européen des brevets

(11) Numéro de publication: **0 136 242**
**A 1**

(12) # DEMANDE DE BREVET EUROPEEN

(21) Numéro de dépôt: **84420112.9**

(22) Date de dépôt: **03.07.84**

(51) Int. Cl.⁴: **H 02 G 7/05**

(30) Priorité: **27.09.83 FR 8315738**

(43) Date de publication de la demande: **03.04.85**
**Bulletin 85/14**

(84) Etats contractants désignés: **AT BE CH DE GB IT LI LU NL SE**

(71) Demandeur: **MALICO : Société Anonyme, Zone Industrielle de l'Argentiére 9-11, rue Baptiste Marcet, F-38600 Fontaine (FR)**

(72) Inventeur: **Lienart, Jean-Pierre, Fernand, Saint Nizier d'Uriage, F-38410 Uriage (FR)**

(74) Mandataire: **Maureau, Pierre et al, Cabinet GERMAIN & MAUREAU B.P. 3011, F-69392 Lyon Cedex 03 (FR)**

(54) **Pince d'ancrage pour câble électrique isolé.**

(57) L'invention a pour objet une pince d'ancrage pour câble électrique isolé.

Cette pince est formée par un fourreau (3) muni d'une fente longitudinale (8) et présentant un évidement (7) et par un noyau compressible (4) présentant une cavité pour le logement du câble, de forme extérieure complémentaire de celle de l'évidement (7) du fourreau (3) et apte à être coincé par coulissement dans ce fourreau (3), et d'une part l'évidement (7) du fourreau (3) est conique et des moyens de verrouillage empêchent l'ouverture de la fente de celui-ci et, d'autre part, le noyau compressible (4) a extérieurement la forme d'un cône de même pente que celui de l'évidement (7) du fourreau (3) et fendu longitudinalement.

Application aux pinces d'ancrage pour câble électrique isolé.

### "Pince d'ancrage pour câble électrique isolé"

La présente invention a pour objet une pince d'ancrage pour câble électrique isolé du type formée par un fourreau muni d'une fente longitudinale et présentant un évidement et par un noyau compressible présentant une cavité pour le logement du câble, de forme extérieure complémentaire de celle de l'évidement du fourreau et apte à être coincé par coulissement dans ce fourreau.

Dans une pince d'ancrage de ce type, déjà connue, le fourreau de section générale en forme de U, présente un évidement prismatique de section rectangulaire et le noyau compressible est formé de deux moitiés de prisme de formes complémentaires de celle de l'évidement, imbriquées l'une dans l'autre et ménageant entre elles une cavité pour le logement du câble. Le serrage du câble logé dans ce noyau est effectué par coulissement du noyau formant coin dans l'évidement du fourreau et par coincement de ce noyau sur deux côtés opposés de faible pente du prisme.

Pour un bon serrage du noyau dans le fourreau, il est nécessaire que ce dernier soit très rigide et quasi indéformable.

Le fourreau, en métal, est donc muni extérieurement de nervures augmentant sa rigidité. Ces nervures sont volumineuses et contribuent à augmenter de façon très importante le volume de la pince, donc son encombrement, son poids et son coût. En outre le noyau, en deux parties est assez compliqué à réaliser.

Le but de l'invention est de remédier à ces inconvénients et, notamment, de fournir une pince d'ancrage du type précité de forme simple, d'encombrement réduit, nécessitant un minimum de matériau, peu lourde, peu coûteuse et facile à monter, tout en assurant un bon serrage du câble à ancrer.

A cet effet, dans la pince qu'elle concerne et qui est du type précité, d'une part l'évidement du fourreau est conique et des moyens de verrouillage empêchent l'ouverture de la fente de celui-ci et, d'autre part, le noyau compressible a extérieurement la forme d'un cône de même pente que celui que l'évidement du fourreau et fendu longitudinalement.

Ainsi, du fait que son ouverture est verrouillée, le fourreau ne peut pas s'ouvrir lors de l'insertion du noyau dans son évidement et des nervures de renforcement ne sont plus nécessaires sur ce fourreau.

Le fourreau peut donc être réalisé de façon beaucoup moins encombrante. En outre, le coincement du noyau dans le fourreau s'effectue selon toute une surface conique et est donc amélioré.

Avantageusement, le fourreau est formé par une enveloppe tronconique d'épaisseur constante. Les surfaces intérieure et extérieure du fourreau sont alors toutes les deux coniques et celui-ci peut être ainsi fabriqué très simplement, avec un minimum de matière et donc être très léger.

Selon une forme d'exécution avantageuse de l'invention, le noyau conique est formé de plusieurs secteurs coniques reliés entre eux par des voiles de matière formant charnière. Ainsi le noyau peut être facilement déployé pour être mis en place sur le câble et être ensuite facilement refermé pour son introduction dans le fourreau. En outre il peut se comprimer facilement entre le fourreau et le câble pour le serrage de ce dernier.

Afin de réaliser le verrouillage empêchant l'ouverture de la fente du fourreau selon une forme d'exécution préférée de l'invention, d'une part des bossages sont disposés sur la surface extérieure du fourreau en chicane de part et d'autre de la fente du fourreau et définissent un parcours sensiblement sinusoïdal et, d'autre part, une tige de verrouillage rigide de forme sensiblement sinusoïdale est apte à être engagée autour des bossages du fourreau sur le parcours qu'ils définissent. Cette tige de verrouillage maintient les bords de la fente à écartement constant, par leurs bossages, et empêche la fente de s'ouvrir.

Avantageusement, la tige de verrouillage est formée par une extrémité d'une tige d'ancrage de la pince, dont l'autre extrémité est fixée sur la périphérie du fourreau en un point diamétralement opposé à la fente du fourreau. La même tige sert alors à la fois au verrouillage et à l'ancrage de la pince.

Avantageusement aussi, des gorges circulaires sont ménagées sur la périphérie des bossages, à l'opposé de la fente, sur le parcours sensiblement sinusoïdal. Ces gorges permettent de retenir la tige de verrouillage dans le parcours.

Selon une autre forme d'exécution de l'invention, les bords de la fente définissent des crochets imbriqués les uns dans les autres, les crochets de chaque bord ayant leur concavité tournée vers ce bord, et la tige de verrouillage est une tige droite. Dans ce cas également la tige de verrouillage peut être une partie de la tige d'ancrage de la pince.

De toute façon l'invention sera mieux comprise et d'autres caractéristiques ressortiront de la description qui suit en référence au dessin schématique annexé représentant à titre d'exemples non limitatifs deux formes d'exécution de cette pince d'ancrage :

Figure 1 est une vue en perspective d'une première pince ;

Figure 2 en est une vue de dessus ;

Figure 3 est une vue de dessus du noyau développé ;

Figure 4 est à échelle agrandie, une vue partielle en bout du noyau de figure 3 ;

Figure 5 est une vue similaire à figure 1 d'une seconde forme de réalisation de la pince d'ancrage.

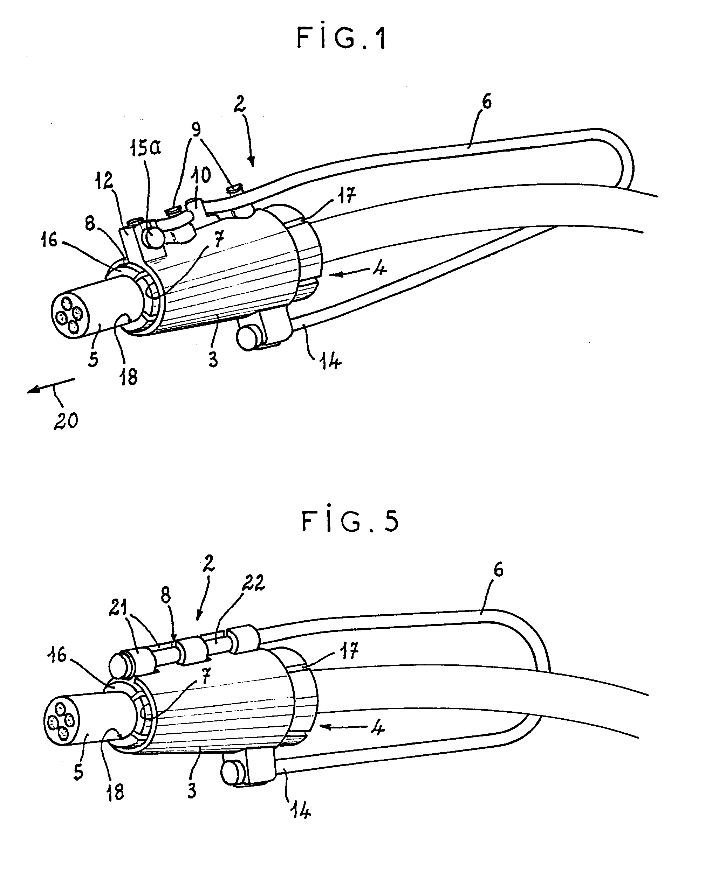

La pince d'ancrage (2) montrée à la figure 1 comprend essentiellement un fourreau (3) de forme conique, un noyau conique (4) apte à être coincé par coulissement dans le fourreau (3) pour serrer un câble électrique (5) dans la pince et une tige (6) pour l'ancrage de cette pince (2).

Le fourreau (3) en polyamide, est formé par une enveloppe tronconique d'épaisseur constante, et de faible pente, ménageant un évidement intérieur conique (7) et présentant une fente longitudinale (8). Des bossages (9) de forme semi-cylindrique sont formés sur chaque bord de la fente (8) et disposés en chicane de part et d'autre de cette fente, leurs faces planes (10) étant en regard les unes des autres. Une gorge circulaire (11) est ménagée à la base de chaque bossage (9) sur son côté cylindrique. Un dernier bossage (12) muni d'une fente (13) est prévu à l'extrémité la moins large du fourreau (3). Les bossages (9,12) et leurs gorges (11,13) définissent un parcours sensiblement sinusoïdal.

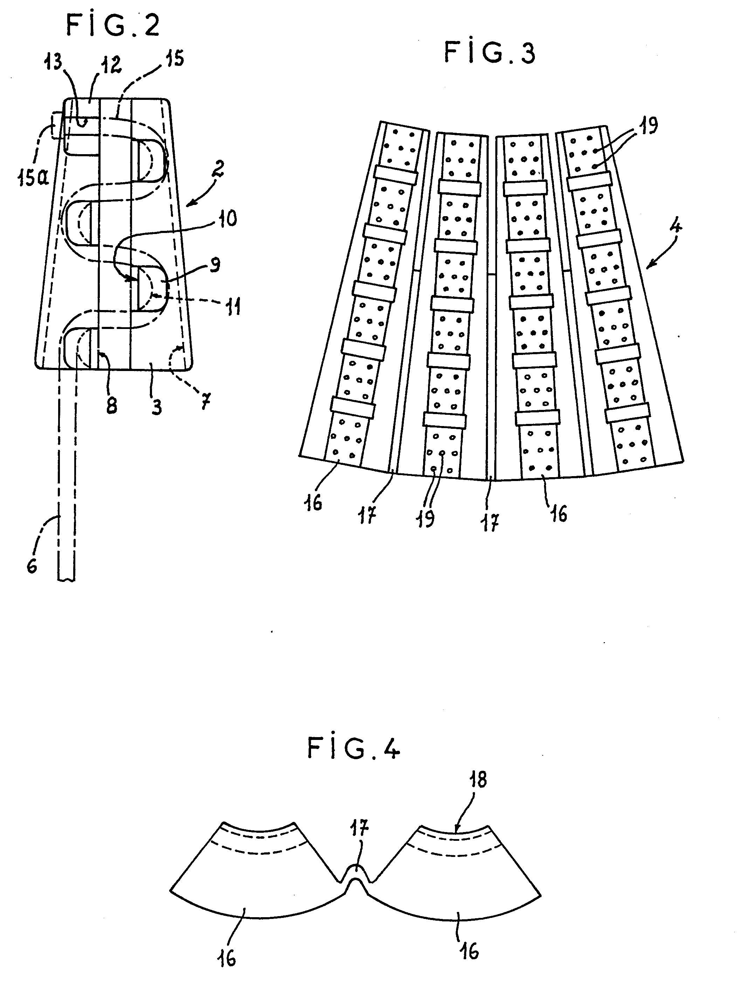

La tige d'ancrage (6) rigide, en alliage d'aluminium est fixée par une extrémité (14) au fourreau (3) en un point diamétralement opposé à sa fente (8), et est donc imperdable. Cette tige (6) est recourbée pour former une boucle et son autre extrémité (15) (en traits mixtes sur la figure 2) est repliée de façon à former une courbe sensiblement sinusoïdale correspondant au parcours défini par les bossages (9,12), et à pouvoir être engagée dans les gorges (11) de ces bossages (9) et dans la fente (13) du bossage (12). L'extrémité (15) de cette tige (6)

4

présente un collet (15a) de diamètre supérieur à la largeur de la fente (13) de façon à retenir la tige (6) dans les gorges (11) des bossages (9) lorsque les bords de la fente tendent à s'écarter l'un de l'autre.

La tige (6) permet de verrouiller la fente (8) du fourreau (3) c'est-à-dire de maintenir, par son extrémité (15), un écartement constant entre les deux bords de la fente (8), notamment lorsque le noyau (4) est enfoncé dans le fourreau (3) et tend à agrandir sa fente (8).

Le noyau (4) est en polystyrène et est formé de plusieurs secteurs coniques (16) (4 secteurs coniques dans l'exemple montré sur le dessin), reliés les uns aux autres par des voiles (17) (3 voiles dans l'exemple du dessin), de façon à réaliser un noyau conique ouvert et compressible. Ces secteurs coniques (16) définissent extérieurement un cône de même pente que l'évidement conique (7) du fourreau (3), et intérieurement une cavité sensiblement cylindrique (18) pour le logement du câble (5) à ancrer. La surface périphérique de cette cavité (18) est munie de picots (19) empêchant le glissement du câble (5) dans cette cavité (18).

Le montage de cette pince d'ancrage est réalisé très simplement. L'extrémité (15) de verrouillage de la tige d'ancrage (6) est tout d'abord retirée de son logement dans les gorges des bossages (9,12), en comprimant latéralement le fourreau (3), c'est-à-dire en rapprochant les bords de sa fente (8). La fente (8) du fourreau (3) n'est alors plus verrouillée et celui-ci peut être ouvert, de façon à permettre l'introduction du câble (5). La boucle de la tige d'ancrage (6) est introduite dans l'anneau d'amarrage. Le fourreau (3) est ensuite refermé par compression latérale et l'extrémité (15) de la tige d'ancrage (6) est à nouveau positionnée autour des bossages (9,12) afin de verrouiller la fente (8) du fourreau (3). Il ne reste alors plus qu'à passer le noyau conique (4) autour du câble (5), en l'ouvrant plus ou moins selon le diamètre de ce câble, et à le faire coulisser sur ce câble (5) dans le fourreau (3) de façon à le coincer dedans.

Le câble (5) est alors serré fortement dans la pince d'ancrage (2). En relachant l'ensemble, une traction est exercée sur le câble (5) dans le sens de la flèche (20) et tend encore à coincer le noyau (4) dans le fourreau (3) qui reste rigide et donc à serrer encore plus le câble (5) dans la pince (2).

La figure 5 montre une autre forme de réalisation du verrouillage de la pince d'ancrage, dans laquelle les mêmes références désignent les mêmes éléments. Dans cette forme de réalisation, chaque bord de la fente (8) du fourreau (3) définit des crochets (21) dont la concavité est tournée vers ce bord. Les crochets (21) des deux bords sont imbriqués entre eux de façon à accueillir une tige de verrouillage (22) rectiligne formée par une extrémité de la tige d'ancrage (6).

Pour verrouiller la fente (8) du fourreau (3) à l'aide de ces crochets (21) et de la tige (22), il faut comprimer latéralement ce fourreau (3), de façon à écarter les crochets (21) les uns des autres, et introduire la tige (22) dans l'espace entre les crochets. En relachant la pression latérale sur le fourreau, celui-ci se détend, et les crochets (21) se rapprochent les uns des autres et viennent enserrer la tige (22), le fourreau (3) est alors verrouillé.

Le montage de la pince d'ancrage selon cette forme d'exécution s'effectue de la même façon que décrite précédemment pour la première forme d'exécution de la pince.

Bien entendu, la présente invention ne se limite pas aux seules formes d'exécution décrites ci-dessus à titre d'exemples non limitatifs, elle en embrasse, au contraire toutes les formes d'exécution mettant en oeuvre des moyens équivalents.

6
## REVENDICATIONS

1. Pince d'ancrage du type formée par un fourreau muni d'une fente longitudinale et présentant un évidement et par un noyau compressible présentant une cavité pour le logement du câble, de forme extérieure complémentaire de celle de l'évidement du fourreau et apte à être coincé par coulissement dans ce fourreau, caractérisée en ce que d'une part l'évidement (7) du fourreau (3) est conique et des moyens de verrouillage empêchent l'ouverture de la fente de celui-ci et, d'autre part, le noyau compressible (4) a extérieurement la forme d'un cône de même pente que celui de l'évidement (7) du fourreau (3) et fendu longitudinalement.

2. Pince d'ancrage selon la revendication 1, caractérisée en ce que le fourreau (3) est formé par une enveloppe tronconique d'épaisseur constante.

3. Pince d'ancrage selon l'une des revendications 1 ou 2, caractérisée en ce que le noyau conique (4) est formé de plusieurs secteurs coniques (16) reliés entre eux par des voiles de matière formant charnière (17).

4. Pince d'ancrage selon l'une des revendications 1 à 3, caractérisée en ce que d'une part des bossages (9,12) sont disposés sur la surface extérieure du fourreau (3) en chicane de part et d'autre de la fente (S) du fourreau et définissent un parcours sensiblement sinusoïdal et, d'autre part, une tige de verrouillage rigide (15) de forme sensiblement sinusoïdale est apte à être engagée autour des bossages (9) du fourreau (3) sur le parcours qu'ils définissent.

5. Pince d'ancrage selon la revendication 4, caractérisé en ce que des gorges circulaires (11) sont ménagées sur la périphérie des bossages (9), à l'opposé de la fente (8), sur le parcours sensiblement sinusoïdal.

6. Pince d'ancrage selon l'une des revendications 1 à 3, caractérisée en ce que les bords de la fente (8) définissent des crochets (21) imbriqués les uns dans les autres, les crochets (21) de chaque bord ayant leur concavité tourné vers ce bord, et la tige de verrouillage (22) est une tige droite.

7. Pince d'ancrage selon l'une des revendications 4 ou 6, caractérisé en ce que la tige de verrouillage (15,22) est formée par une extrémité d'une tige d'ancrage (6) de la pince (2), dont l'autre extrémité (14) est fixée sur la périphérie du fourreau (3) en un point diamétralement opposé à la fente (8) du fourreau.

8. Pince d'ancrage selon l'une quelconque des revendications précédentes, caractérisée en ce que le fourreau (3) est en polyamide.

9. Pince d'ancrage selon l'une quelconque des revendications précédentes, caractérisée en ce que le noyau conique (4) est en polystyrène.

10. Pince d'ancrage selon l'une quelconque des revendications précédentes, caractérisée en ce que la tige d'ancrage (6) est en alliage d'aluminium.

FİG.1

FİG.5

FİG.2

FİG.3

FİG.4

Office européen des brevets

# RAPPORT DE RECHERCHE EUROPEENNE

0136242
Numéro de la demande

EP 84 42 0112

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 105 428 (SIMEL) <br> * Page 2, lignes 11-17, 27-33; figure 1 * | 1-3 | H 02 G 7/05 |
| Y | | 4-10 | |
| | --- | | |
| Y | FR-A-1 287 437 (DETALLANTE) <br> * Page 2, colonne de gauche, alinéas 1,2; figures 2,3 * | 4,5 | |
| | --- | | |
| Y | US-A-3 306 970 (KOWALSKI) <br> * Colonne 2, lignes 43-62; figures 1,7 * | 4 | |
| | --- | | |
| Y | DE-B-1 092 088 (LYNENWERK) <br> * Colonne 2, lignes 32-51 * | 6,7 | **DOMAINES TECHNIQUES RECHERCHES (Int. Cl.4)** |
| | --- | | |
| Y | FR-A-2 493 623 (MIETTINEN) <br> * Page 5, lignes 1-26, 33-36; figures 7,8 * | 6,8,9 | H 02 G 7/00 |
| | --- | | |
| Y | BE-A- 811 115 (MIETTINEN) <br> * Page 4, dernier alinéa; page 5, alinéas 1-3; page 7, alinéa 1 * | 6,10 | |
| A | | 3 | |
| | ----- | | |

Le présent rapport de recherche a été établi pour toutes les revendications

| Lieu de la recherche <br> LA HAYE | Date d'achèvement de la recherche <br> 21-11-1984 | Examinateur <br> TIELEMANS H.L.A. |
|---|---|---|